(19) Europäisches Patentamt
European Patent Office
Office européen des brevets

(11) **EP 2 280 913 B1**

(12) **FASCICULE DE BREVET EUROPEEN**

(45) Date de publication et mention
de la délivrance du brevet:
**14.08.2019 Bulletin 2019/33**

(21) Numéro de dépôt: **09761894.6**

(22) Date de dépôt: **13.05.2009**

(51) Int Cl.:
*C03C 17/34* (2006.01)     *C03C 17/36* (2006.01)

(86) Numéro de dépôt international:
**PCT/FR2009/050881**

(87) Numéro de publication internationale:
**WO 2009/150343 (17.12.2009 Gazette 2009/51)**

(54) **VITRAGE MUNI D'UN EMPILEMENT DE COUCHES MINCES**

MIT EINEM STAPEL AUS DÜNNEN SCHICHTEN VERSEHENE GLASSCHEIBE

GLAZING PROVIDED WITH A STACK OF THIN LAYERS

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **19.05.2008 FR 0853222**

(43) Date de publication de la demande:
**09.02.2011 Bulletin 2011/06**

(73) Titulaire: **Saint-Gobain Glass France
92400 Courbevoie (FR)**

(72) Inventeurs:
• **MAUVERNAY, Bruno
F-75014 Paris (FR)**
• **RONDEAU, Véronique
F-92600 Asnieres Sur Seine (FR)**
• **BELLIOT, Sylvain
75013 Paris (FR)**

(74) Mandataire: **Saint-Gobain Recherche
Département Propriété Industrielle
39 Quai Lucien Lefranc
93300 Aubervilliers (FR)**

(56) Documents cités:
**WO-A-01/21540        US-A1- 2004 137 234
US-A1- 2005 079 369**

**Description**

La présente invention concerne des vitrages munis d'empilements de couches minces agissant sur le rayonnement solaire, notamment les vitrages destinés à l'isolation thermique et /ou la protection solaire.

L'invention concerne également ce type de vitrage une fois opacifié de façon à faire partie d'un panneau de parement de façade, appelé « allège », et qui permet , en association avec des vitrages pour la vision, d'offrir des surfaces extérieures de bâtiments entièrement vitrées.

Ce type de vitrage est utilisé depuis de nombreuses années dans le domaine du bâtiment, d'une part afin d'améliorer l'isolation thermique des bâtiments et, d'autre part pour limiter la quantité de rayonnement solaire pénétrant dans le bâtiment (limiter l'effet de serre). On s'intéresse alors au rayonnement solaire comprenant le spectre lumineux s'étendant des rayons UV (longueur d'onde égale à environ 290 nm) au proche infrarouge (longueur d'onde égale à environ 2500 nm) et au rayonnement infrarouge thermique (de longueur d'onde comprise entre environ 2500 nm et 50 microns).

Une première solution consiste à agir sur la composition du verre pour obtenir les caractéristiques souhaitées. Cependant cette solution s'est révélée ni pratique ni économique puisque pour modifier la composition du verre il est nécessaire de vider préalablement le four de fabrication du verre, ce qui est coûteux et ce qui prend beaucoup de temps. On a alors privilégié la solution qui consiste à déposer une ou plusieurs couches minces sur au moins l'une des faces du verre. Dans un empilement de couches, on distingue au moins deux types de couches différentes : des couches dites fonctionnelles qui confèrent à l'empilement l'essentiel de ses propriétés thermiques et des couches de protection, généralement en matériaux diélectriques transparent, dont le rôle principal est celui d'une protection chimique et/ou mécanique des couches fonctionnelles.

Cependant certaines utilisations du verre nécessitent des qualités particulières de ce matériau. Ainsi dans le domaine du bâtiment et de l'automobile, il est souhaitable ou même nécessaire d'utiliser du verre trempé (verre de « sécurité »), la trempe ou le processus de trempage conférant une bonne résistance mécanique au verre. Malheureusement, le verre trempé ne peut pas être découpé et il est donc nécessaire que le verre ait sa forme et ses dimensions finales avant la trempe ou le processus de trempage. La trempe du verre étant réalisée en portant le verre à une température élevée (voisine de 700°C) puis en abaissant rapidement la température (ce qui créé des contraintes mécaniques à l'intérieur du verre), des couches minces déposées sur le verre avant la trempe ou le processus de trempage ne supportent généralement pas un tel traitement et perdent leurs qualités optiques et/ou thermiques.D'autre part, la solution qui consisterait à déposer les couches minces sur le verre déjà trempé pose des problèmes de logistique et n'est pas viable industriellement.

Une autre propriété souvent demandée au verre est de pouvoir supporter un traitement thermique afin d'être travaillé pour lui donner une forme galbée ou bombée: on dit alors que le verre est «bombable ».

Un problème technique à résoudre est donc de mettre au point un empilement de couches minces dont les qualités ne sont pas dégradées lorsque le verre sur lequel il est déposé est trempé et/ou bombé. En d'autres termes, l'empilement de couches minces doit être «trempable» et « bombable ». Les qualités des couches minces à ne pas dégrader sont notamment les performances de filtrage du rayonnement solaire et les caractéristiques optiques telles que les couleurs et l'intensité de la transmission lumineuse.

Des solutions ont déjà été proposées sous forme d'empilements relativement simples. Ainsi un exemple de vitrage anti-solaire pour le bâtiment est donné par les brevets EP 0 511 901 et EP 0 678 483 : il s'agit de couches fonctionnelles sur le plan de la filtration des rayonnements solaires, couches en alliage nickel-chrome, éventuellement nitruré, en acier inoxydable ou en tantale et qui sont disposées entre deux couches de diélectrique en oxyde métallique comme $SnO_2$, $TiO_2$ ou $Ta_2O_5$. Cependant ces vitrages ne sont pas véritablement «bombables» ou «trempables» car les couches d'oxyde entourant la couche fonctionnelle ne peuvent empêcher son oxydation lors du bombage ou de la trempe, oxydation s'accompagnant d'une modification de la transmission lumineuse et de l'aspect du vitrage dans son ensemble.

Plus récemment, il a été proposé dans la demande de brevet WO 01/21540 A1 un substrat transparent muni d'un empilement de couches minces constitué d'une couche fonctionnelle en métal (Nb, Ta, Zr) ou en nitrure de ce métal et une surcouche en nitrure ou oxynitrure d'aluminium et/ou nitrure ou oxynitrure de silicium. Cette solution est relativement satisfaisante puisque l'empilement est «bombable», «trempable», résistant mécaniquement et présente de bonnes caractéristiques optiques. Cependant, si l'on souhaite diminuer la transmission lumineuse $T_L$, il faut augmenter l'épaisseur de la couche fonctionnelle, ce qui présente l'inconvénient d'augmenter les réflexions lumineuses en particulier à l'intérieur du bâtiment. Lorsqu'il fait sombre (ou nuit) à l'extérieur, on a tendance, à l'intérieur du bâtiment, à ne voir plus que l'empilement de couches minces, le vitrage prenant alors une couleur relativement intense, peu esthétique, à dominante jaune/orange. Dans le modèle CIE Lab de représentation de couleurs développé par la Commission Internationale de l'Eclairage (CIE), ces couleurs correspondent à a* supérieur à 0 et b* très supérieur à 0. Idéalement, on tend dans ce modèle à obtenir des valeurs proches de zéro pour les composantes a* et b*, ce qui conduit à des couleurs moins vives tendant vers des nuances de gris (plus neutres), donc plus agréables.

La publication US2005079369 décrit un empilement comprenant deux couches de Nb ou de NbN séparées par une couche barrière de Cr ou de $CrN_x$ et des couches de $SiN_x$ de part et d'autre de cet ensemble de couches.

La publication US2004137234 décrit un empilement comprenant la succession de couches $Si_3N_4/Nb_xN_y/Si_3N_4$.

Le but de la présente invention est donc la mise au point de nouveaux empilements de couches minces agissant sur le rayonnement solaire en vue de fabriquer des vitrages de protection solaire améliorée. L'amélioration visée est notamment de réduire les réflexions et/ou de neutraliser les couleurs pour une valeur de transmission lumineuse donnée, tout en conservant l'aptitude à supporter les traitements thermiques (trempe et bombage) sans dommage quand le substrat porteur de l'empilement est de type verrier.

L'objet de l'invention est un substrat transparent à fonction verrière muni d'un empilement de couches minces agissant sur le rayonnement solaire selon les revendications ci-jointes. Selon l'invention, l'empilement comporte au moins deux couches fonctionnelles absorbantes encadrées chacune par deux couches transparentes comprenant un matériau diélectrique.

De façon avantageuse,

- les couches fonctionnelles sont à base d'un métal appartenant au groupe du niobium, du tantale et du zirconium, le molybdène, la préférence étant pour le niobium ;
- le métal d'au moins l'une des couches fonctionnelles est partiellement ou entièrement nitruré,
- le substrat peut comporter au moins une alternance d'une couche fonctionnelle à base d'un métal nitruré et d'une couche fonctionnelle à base d'un métal non nitruré ou au moins une alternance d'une couche fonctionnelle à base d'un métal non nitruré et d'une couche fonctionnelle à base d'un métal nitruré,
- le matériau diélectrique peut être à base de nitrure de silicium, dopé ou non avec de l'aluminium,
- une couche sacrificielle peut être interposée entre au moins l'une des couches fonctionnelles et au moins l'une des couches diélectriques qui l'encadrent, la couche sacrificielle pouvant être à base de titane ou de nickel chrome et son épaisseur pouvant être de l'ordre de quelques nanomètres, comprise entre 1 nm et 3 nm, voire inférieure à 1 nm,
- au moins l'une des couches diélectriques peut être composée d'une alternance de couches à fort et faible indice, comme $Si_3N_4$ / $SiO_2$ ou $Si_3N_4$ / $SiO_2/Si_3N_4$,
- la somme des épaisseurs des couches fonctionnelles peut être au maximum de 50 nm et les épaisseurs des couches fonctionnelles peuvent être sensiblement égales.
- le substrat peut être trempable, bombable et/ou émaillable,
- le substrat peut être en verre, clair ou teinté dans la masse, ou en matériau polymère transparent souple ou rigide- le substrat peut être au moins partiellement opacifié par un revêtement sous forme d'une laque ou d'un émail.

L'invention concerne également un vitrage monolithique (c'est-à-dire constitué d'un substrat unique) ou des vitrages multiples isolants du type double vitrage, incorporant le substrat tel que défini précédemment. L'empilement de couches minces se trouve de préférence en face 2, les faces des substrats étant numérotées de l'extérieur vers l'intérieur de l'habitacle ou du local qu'il équipe, lui conférant un effet de protection vis-à-vis du rayonnement solaire. (Conventionnellement, la face 1 du substrat est dirigée vers l'extérieur, et pour un double vitrage, la face 3 constitue la face interne du deuxième substrat en regard de la face 2 du premier substrat, et la face 4 constitue alors la face externe du deuxième substrat)

Le vitrage peut être avantageusement à dominance bleu/vert, avec notamment des valeurs de a* et de b* négatives.

L'invention concerne aussi un panneau de parement de façade de type allège incorporant le substrat opacifié tel que défini précédemment.

D'autres avantages et caractéristiques de l'invention apparaîtront au cours de la description qui suit de plusieurs modes de réalisation de l'invention, donnés à titre d'exemples non limitatifs.

Ainsi, la solution apportée par la présente invention consiste en un empilement de couches minces comprenant au moins deux couches fonctionnelles absorbantes encadrées chacune par deux couches d'un matériau diélectrique transparent. De préférence :

- les couches fonctionnelles absorbantes sont réalisées à partir d'un métal choisi parmi le niobium (Nb), le tantale (Ta), le molybdène (Mo), et le zirconium (Zr) ou à base d'un nitrure de l'un de ces métaux (MoN, NbN, TaN, ZrN), utilisé seul ou en mélange

- le matériau diélectrique transparent des couches encadrant les couches fonctionnelles est de préférence du nitrure de silicium ($Si_3N_4$).

Selon l'invention, une forme de réalisation de l'empilement peut alors être la suivante :

Substrat verrier/ $Si_3N_4$/ NbN / $Si_3N_4$/ NbN / $Si_3N_4$

Substrat verrier/ $Si_3N_4$/ NbN / $Si_3N_4$/ Nb / $Si_3N_4$

Substrat verrier/ $Si_3N_4$/ Nb / $Si_3N_4$/ NbN / $Si_3N_4$

On remarque que chaque couche fonctionnelle Nb ou NbN est bien encadrée par deux couches d'un matériau diélectrique ($Si_3N_4$ dans l'exemple donné).

Les couches fonctionnelles de type Mo, Nb, Ta, Zr sont particulièrement stables et peuvent subir des traitements thermiques divers sans endommager leurs propriétés optiques. On a en effet pu montrer que, par exemple, le niobium va se nitrurer partiellement pendant un recuit, ce qui va modifier l'optique. Le molybdène a tendance à s'oxyder très facilement et à devenir transparent. Les couches fonctionnelles de type nitrure, tout particulièrement le nitrure de niobium, présentent également une forte stabilité chimique.

Les couches fonctionnelles doivent être absorbantes, ce qui signifie qu'elles sont absorbantes dans le domaine du visible. De façon générale une couche mince est dite absorbante lorsqu'elle absorbe une partie des rayons lumineux dans le domaine du visible.

Les épaisseurs des couches fonctionnelles de NbN peuvent être chacune de l'ordre de 10 nm (la somme des épaisseurs des deux couches ne dépassant pas 40 à 50 nm), alors qu'avec la solution de l'art antérieur décrite dans le brevet WO 01/21540 A1, où une seule couche est utilisée (empilement correspondant à $Si_3N_4$ / NbN / $Si_3N_4$) son épaisseur est plutôt de l'ordre de plusieurs dizaines de nm. Les épaisseurs de couches fonctionnelles peuvent être ajustées en fonction de la transmission lumineuse $T_L$ souhaitée pour l'empilement.

De façon avantageuse, les couches minces fonctionnelles peuvent être encadrées par des couches minces sacrificielles, par exemple à base de titane. Les couches sacrificielles sont alors intercalées entre une couche fonctionnelle et une couche diélectrique. Le but d'une couche sacrificielle est de protéger le caractère métallique (à l'état non trempé) de la couche de Nb, Ta ou Zr. A titre d'exemple, on pourrait avoir l'empilement suivant avec des couches sacrificielles en titane Ti : Verre / $Si_3N_4$ / Ti / Nb / Ti / $Si_3N_4$/ Ti / Nb / Ti / $Si_3N_4$ L'épaisseur de cette couche sacrificielle est de l'ordre de quelques nanomètres, comprise entre 1 nm et 3 nm, voire inférieure à 1 nm.

En variante le titane peut remplacer par du nickel chrome: Le choix de l'épaisseur des couches diélectriques transparentes permet d'ajuster les couleurs de l'empilement, vues de l'intérieur et de l'extérieur du bâtiment. Pour une valeur de $T_L$ donnée, l'utilisation d'un empilement de couches minces conforme à l'invention permet :

- de réduire de façon significative les niveaux de réflexions,

- de rendre plus neutres les couleurs en réflexion (a* et b* dans le système Lab tendant vers 0) ou même d'obtenir des couleurs à dominante bleu/vert (a* et b* de valeurs négatives).

Une ou plusieurs couches diélectriques transparentes peut ou peuvent être remplacée(s) par une alternance de couches à fort et faible indice, comme par exemple $Si_3N_4$ / $SiO_2$ ou $Si_3N_4$ / $SiO_2$/ $Si_3N_4$.

Avantageusement, les couches de l'empilement qui sont à base de nitrure de silicium peuvent également contenir un métal minoritaire par rapport au silicium, par exemple de l'aluminium, notamment de 5% à 10% en poids du composé constituant la couche en matériau diélectrique transparent. Cela est utile pour accélérer le dépôt de la couche par pulvérisation magnétron assistée par champ magnétique, où la cible en silicium sans un dopage n'est pas assez conductrice.

De plus, le métal peut conférer une meilleure durabilité au nitrure.

Les exemples donnés ci-après illustrent différents modes de réalisation de l'invention et permettent de comparer les caractéristiques des empilements obtenues selon l'art antérieur et selon l'invention.

Dans les exemples qui suivent, les dépôts des couches ont été réalisés par pulvérisation magnétron assistée par champ magnétique, à température ambiante, sur un substrat en verre de 4 mm d'épaisseur

Dans ces exemples :

- la transmission optique TL est la transmission lumineuse en % selon l'illuminant $D_{65}$.

- la réflexion extérieure Rout est la réflexion en % mesurée coté verre du local ou du bâtiment, quand le verre revêtu de l'empilement de couches minces est monté en vitrage monolithique dans un local avec l'empilement de couches en face 2 (selon le système conventionnel de numérotation des faces d'un substrat, précédemment explicité).

- la réflexion intérieur Rin est la réflexion en % mesurée coté couche du local ou du bâtiment, quand le verre revêtu de l'empilement de couches minces est monté en vitrage monolithique dans un local avec l'empilement de couches en face 2.

- a* et b* (extérieur) (ou a* et b* intérieur) sont les coordonnées colorimétriques en réflexion extérieure (ou intérieur) selon le modèle de colorimétrie (L, a*, b*).

## Exemple comparatif 1

| empilement | N°1 : 1 couche de NbN | N° 2 : 2 couches de NbN |
|---|---|---|
| $T_L$ | 20% | 20% |
| Rin | 26% | 8% |
| a* ; b* (intérieur) | 2 ; 16 | -2 ; -3 |
| Rout | 32% | 6% |
| a* ; b*(extérieur) | -1 ; -2 | -1 ; -3 |

Dans cet exemple comparatif, l'empilement N°1 est du type Verre / $Si_3N_4$ / NbN / $Si_3N_4$ , ce qui correspond à l'art antérieur décrit dans la demande de brevet WO 01/21540 A1, la couche unique de NbN (couche fonctionnelle) ayant une épaisseur de 25 nm. L'empilement N°2 est du type Verre / $Si_3N_4$ / NbN / $Si_3N_4$ / NbN / $Si_3N_4$ conforme à la présente invention, l'épaisseur de la première couche fonctionnelle de NbN étant de 10 nm et l'épaisseur de la deuxième couche de NbN de 13 nm. L'épaisseur totale des deux couches de NbN de l'empilement N°2 est donc sensiblement identique à l'épaisseur de la couche unique de l'empilement N°1 (13+10 nm comparé à 25 nm). Pour l'empilement N°2, l'épaisseur de la première couche de $Si_3N_4$ (couche adjacente au verre V) est comprise entre 30 et 50 nm, l'épaisseur de la deuxième couche de $Si_3N_4$ est comprise entre 60 et 80 nm et l'épaisseur de la troisième couche comprise entre 30 et 50 nm.

On remarque qu'à transmission lumineuse $T_L$ égale (20%) et pour des épaisseurs de NbN semblables, les coefficients de réflexion aussi bien interne qu'externe de l'empilement N°2 sont très inférieurs à ceux de l'empilement N°1. De plus, les valeurs de a* et b* du coté intérieur au local sont légèrement négatives, ce qui produit une couleur relativement neutre (moins jaune qu'avec l'empilement N°1).

## Exemple comparatif 2

Cet exemple concerne un empilement du type :
Verre / Si3N4 / NbN / Si3N4 / NbN / Si3N4
Les épaisseurs (en nm) des différentes couches sont indiquées dans le tableau suivant.

| Couche | Si3N4 | NbN | Si3N4 | NbN | Si3N4 |
|---|---|---|---|---|---|
| Epaisseur (en nm) | 40 | 8 | 80 | 13 | 35 |

Pour une transmission lumineuse TL de l'ordre de 20 %, les résultats suivants ont été obtenus :

TL=21%
Rout=9.0 a*= -2.5 b*= -18.1 (coté verre)
Rin=16.9 a*= - 4.8 b*=0.7 (coté couche)

Rout est le coefficient de réflexion de l'empilement vue du coté verre et les valeurs de a* et b* correspondent aux couleurs vues du coté verre, alors que Rin et les a* et b* correspondants sont des valeurs en regardant l'empilement du coté des couches. L'utilisation d'un empilement bicouches NbN permet d'obtenir des valeurs faibles de réflexion coté couche et coté verre ainsi qu'une couleur bleue très marquée coté verre, et légèrement verte coté couche.

Le contre exemple ci-dessous concerne deux empilements monocouche du type de l'art antérieur : Verre / $Si_3N_4$/ NbN / $Si_3N_4$. Deux séries d'épaisseurs différentes (en nm) sont indiquées dans le tableau ci-dessous.

| Couche | Si$_3$N$_4$ | NbN | Si$_3$N$_4$ | |
|--------|-------------|-----|-------------|---|
| Epaisseur 1 | 85 | 27 | 30 | TL=21%<br>Rout=22.6 a*=-4.6 b*=-14.4<br>Rin=20.5 a*=7.0 b*=25.8 |
| Epaisseur 2 | 110 | 22 | 15 | TL=21%<br>Rout=21.2 a*=-6.5 b*=-7.6<br>Rin=31.2 a*=3.4 b*=2.2 |

On remarque que pour une même valeur de transmission lumineuse TL l'utilisation d'un empilement monocouche fonctionnelle NbN ne permet pas d'obtenir des valeurs de réflexion lumineuse aussi basses et/ou des couleurs neutres ou bleu/vert du coté couche.

### Exemple comparatif 3

Pour certaines applications il peut être intéressant d'ajouter une couche sacrificielle intercalée entre une couche fonctionnelle et une couche diélectrique. Une couche sacrificielle est destinée à protéger le caractère métallique (à l'état non trempé) de la couche fonctionnelle. Elle peut avantageusement être à base de titane et son épaisseur est relativement faible (généralement ≤ 1 nm).

Cet exemple concerne deux empilements munis de couches sacrificielles en titane encadrant la ou les couches fonctionnelles en niobium, l'un (N°1) selon l'art antérieur :

Verre / Si$_3$N$_4$ / Ti / Nb / Ti / Si$_3$N$_4$

et l'autre (N°2) selon la présente invention :

Verre / Si$_3$N$_4$ / Ti / Nb / Ti / Si$_3$N$_4$ / Ti / Nb / Ti / Si$_3$N$_4$

| Empilement | N°1 | N°2 |
|------------|-----|-----|
| TL | 20% | 20% |
| R in | 41% | 14% |
| a*(intérieur) | 1 | 0 |
| b*(intérieur) | 17 | - 9 |
| Rout | 28% | 13% |
| a* (extérieur) | 0 | 2 |
| b*(extérieur) | 8 | - 2 |
| ε(émissivité) | 5 - 10% | 15 - 20% |

L'épaisseur de la couche de Nb

- pour l'empilement N°1 est 30 nm, légèrement supérieure à la somme (20 nm) des épaisseurs des deux couches de Nb de l'empilement N°2.

On remarque que pour un même coefficient de transmission lumineuse TL, l'empilement N°2 avec deux couches fonctionnelles est beaucoup moins réfléchissant que l'empilement N°1 à une seule couche fonctionnelle, aussi bien vers l'intérieur (Rin) où l'on gagne environ 30%, que vers l'extérieur (Rout). De plus, avec des valeurs de b* pour l'intérieur passant de 17 à - 9, on passe d'une couleur jaune à une couleur bleue beaucoup plus agréable. Les valeurs obtenues pour l'émissivité ε montre que l'empilement reste à caractère relativement bas émissif (l'émissivité est la capacité à réfléchir une très grande partie de rayons infrarouges thermiques, de longueurs d'onde comprise entre 3 et 50 microns .

On remarque qu'avec l'empilement N°2 intégré au sein double vitrage du type 6mm/4mm, les vitrages étant séparés par une lame d'argon de 15 mm, on obtient un facteur U=1.5W/m$^2$.K , ces valeurs étant à comparer au même type de vitrage (sans empilement N°2), on obtient une valeur de U=2.6 W/m$^2$.K

On donne ci-après une autre structure d'empilement selon l'invention (structures mixtes NbN/Nb)

**Exemple 3 :**

Verre / Si$_3$N$_4$ (40)/ NbN(8) / Si$_3$N$_4$(65)/ Ti/(1)/ Nb(8) / Ti(1) / Si$_3$N$_4$(35)
Que l'on compare à l'exemple 4 (état de l'art) pour lequel les valeurs de TL et données a*out, b*out, Rout sont globalement similaires :
Verre / Si$_3$N$_4$ (80)/ Nb(23) / Si$_3$N$_4$ (28)

| Empilement | N°3 | N°4 |
|---|---|---|
| TL | 20% | 21 % |
| R in | 12.4% | 28% |
| a*(intérieur) | -0.3 | -11.3 |
| b*(intérieur) | -0.7 | -11.2 |
| Rout | 6.6% | 22.3% |
| a* (extérieur) | -1.3 | -3.6 |
| b*(extérieur) | -17.9 | -15.3 |

Comme on peut le voir, l'empilement selon l'exemple 3 par rapport celui de l'exemple 4 voit sa Rin singulièrement amélioré ainsi que ses paramètres optiques (a*, b*)in (neutre en réflexion)
En variante, une structure mixte d'empilement Nb/NbN est aussi possible.
Un empilement de couches conforme à la présente invention est bombable et/ou trempable et/ émaillable. On comprend au sens de l'invention par « bombable » ou « trempable », un empilement qui, déposé sur un substrat, subit une évolution optique limitée qui peut notamment être quantifiée en se plaçant dans le modèle de représentation des couleurs CIE Lab (L, a*, b*) par une valeur ΔE inférieure à 3, notamment inférieure à 2.
On définit ΔE de la façon suivante :

$$\Delta E = (\Delta L^2 + \Delta a^2 + \Delta b^2)$$

Avec ΔL, Δa et Δb la différence des mesures de L, a* et b* avant et après traitement thermique.
Un empilement conforme à la présente invention peut éventuellement subir un traitement d'émaillage particulièrement intéressant pour les allèges. L'émaillage permet d'opacifier les vitrages en allèges. L'empilement de couches selon l'invention est émaillable, en ce sens que l'on peut déposer sur lui un émail et le cuire sans en modifier sensiblement l'aspect optique par rapport à un vitrage de vision muni des mêmes couches, en réflexion extérieure. On considère comme «émaillable» l'empilement sur lequel on peut déposer de façon connue une composition d'émail, sans apparition de défauts optiques dans l'empilement et avec une évolution optique limitée, que l'on peut quantifier comme précédemment. Cela signifie également qu'il présente une durabilité satisfaisante, sans détérioration gênante des couches de l'empilement au contact de l'émail ni au cours de sa cuisson, ni au cours du temps une fois le vitrage monté.
Un empilement conforme à l'invention est intéressant quand on utilise des substrats en verre clair ou teinté dans la masse. Cependant, on peut tout aussi bien ne pas chercher à exploiter son caractère bombable ou trempable mais simplement sa durabilité satisfaisante, en utilisant des substrats verriers mais aussi non verriers, notamment en matériau polymère rigide et transparent comme le polycarbonate, le polyméthacrylate de méthyle (P.M.M.A) se substituant au verre, ou encore un matériau polymère souple, comme certains polyuréthanes ou comme le polyéthylènetéréphtalate (PET), matériau souple que l'on peut ensuite solidariser à un substrat rigide pour le fonctionnaliser en les faisant adhérer par différents moyens, ou par une opération de feuilletage.
La présente invention permet d'obtenir des vitrages à contrôle solaire, possédant des valeurs de réflexions faibles et également des couleurs tirant sur le vert ou le bleu difficilement atteignables avec des empilements à une seule couche fonctionnelle.
D'autres modes de réalisation que ceux décrits et représentés peuvent être conçus par l'homme du métier sans sortir du cadre de la présente invention.

**Revendications**

**1.** Substrat transparent à fonction verrière muni d'un empilement de couches minces agissant sur le rayonnement solaire, **caractérisé en ce que** l'empilement comporte au moins deux couches fonctionnelles absorbantes encadrées chacune par deux couches transparentes comprenant un matériau diélectrique, les couches fonctionnelles étant à base d'un métal appartenant au groupe du niobium, du tantale, du molybdène et du zirconium.

2. Substrat selon la revendication 1 **caractérisé en ce que** les couches fonctionnelles sont à base de niobium.

3. Substrat selon l'une des revendications 1 et 2 **caractérisé en ce que** le métal d'au moins l'une des couches fonctionnelles est partiellement ou entièrement nitruré.

4. Substrat selon la revendication 3 **caractérisé en ce que** le métal de toutes les couches fonctionnelles est nitruré.

5. Substrat selon la revendication 3 **caractérisé en ce qu'**il comporte au moins une alternance d'une couche fonctionnelle à base d'un métal nitruré et d'une couche fonctionnelle à base d'un métal non nitruré ou au moins une alternance d'une couche fonctionnelle à base d'un métal non nitruré et d'une couche fonctionnelle à base d'un métal nitruré.

6. Substrat selon l'une des revendications précédentes **caractérisé en ce que** ledit matériau diélectrique est à base de nitrure de silicium.

7. Substrat selon la revendication 6 **caractérisé en ce que** ledit matériau diélectrique est dopé avec de l'aluminium.

8. Substrat selon la revendication 7 **caractérisé en ce que** l'aluminium est en proportion en poids de 5 à 10%.

9. Substrat selon l'une des revendications précédentes **caractérisé en ce qu'**une couche sacrificielle est interposée entre au moins l'une des couches fonctionnelles et au moins l'une des couches diélectriques qui l'encadrent.

10. Substrat selon la revendication 9 **caractérisé en ce que** la couche sacrificielle est à base de titane ou de nickel chrome.

11. Substrat selon l'une des revendications 9 et 10 **caractérisé en ce que** l'épaisseur de la couche sacrificielle est de l'ordre de quelques nanomètres, compris entre 1 nm et 3 nm .

12. Substrat selon l'une des revendications précédentes **caractérisé en ce qu'**au moins l'une des couches diélectriques est composée d'une alternance de couches à fort et faible indice, comme $Si_3N_4$ / $SiO_2$ ou $Si_3N_4$/ $SiO_2$/ $Si_3N_4$.

13. Substrat selon l'une des revendications précédentes **caractérisé en ce que** la somme des épaisseurs des couches fonctionnelles est au maximum de 50 nm.

14. Substrat selon l'une des revendications précédentes **caractérisé en ce que** les épaisseurs des couches fonctionnelles sont sensiblement égales.

15. Substrat selon l'une des revendications précédentes **caractérisé en ce qu'**il est trempable, bombable et/ou émaillable.

16. Substrat selon l'une des revendications précédentes **caractérisé en ce qu'**il est en verre, clair ou teinté dans la masse, ou en matériau polymère transparent souple ou rigide.

17. Substrat selon l'une des revendications précédentes **caractérisé en ce qu'**il est au moins partiellement opacifié par un revêtement sous forme d'une laque ou d'un émail.

18. Vitrage monolithique ou double vitrage incorporant le substrat selon l'une des revendications précédentes, l'empilement de couches minces se trouvant de préférence en face 2, les faces des substrats étant numérotées de l'extérieur vers l'intérieur de l'habitacle ou du local qu'il équipe, lui conférant un effet de protection vis-à-vis du rayonnement solaire.

19. Panneau de parement de façade de type allège incorporant le substrat opacifié selon la revendication 17.

**EP 2 280 913 B1**

**Patentansprüche**

1. Transparentes Substrat mit Verglasungsfunktion, versehen mit einem Stapel aus dünnen Schichten, die auf die Sonnenstrahlung einwirken, **dadurch gekennzeichnet, dass** der Stapel mindestens zwei absorbierende funktionelle Schichten aufweist, die jede von zwei transparenten Schichten eingefasst sind, die ein dielektrisches Material umfassen, wobei die funktionellen Schichten auf der Basis eines Metalls sind, das zur Gruppe aus Niob, Tantal, Molybdän und Zirkonium gehört.

2. Substrat nach Anspruch 1, **dadurch gekennzeichnet, dass** die funktionellen Schichten auf der Basis von Niob sind.

3. Substrat nach einem der Ansprüche 1 und 2, **dadurch gekennzeichnet, dass** das Metall mindestens einer der funktionellen Schichten teilweise oder vollständig nitridiert ist.

4. Substrat nach Anspruch 3, **dadurch gekennzeichnet, dass** das Metall allerfunktionellen Schichten nitridiert ist.

5. Substrat nach Anspruch 3, **dadurch gekennzeichnet, dass** es mindestens eine Abfolge einer funktionellen Schicht auf der Basis eines nitridierten Metalls und einer funktionellen Schicht auf der Basis eines nicht nitridierten Metalls oder mindestens eine Abfolge einer funktionellen Schicht auf der Basis eines nicht nitridierten Metalls und einer funktionellen Schicht auf der Basis eines nitridierten Metalls aufweist.

6. Substrat nach einem der vorangehenden Ansprüche, **dadurch gekennzeichnet, dass** das dielektrische Material auf der Basis von Siliciumnitrid ist.

7. Substrat nach Anspruch 6, **dadurch gekennzeichnet, dass** das dielektrische Material mit Aluminium dotiert ist.

8. Substrat nach Anspruch 7, **dadurch gekennzeichnet, dass** der Gewichtsanteil an Aluminium von 5 bis 10 % beträgt.

9. Substrat nach einem der vorangehenden Ansprüche, **dadurch gekennzeichnet, dass** eine Opferschicht zwischen mindestens eine der funktionellen Schichten und mindestens eine der dielektrischen Schichten, die sie einfassen, eingeschoben ist.

10. Substrat nach Anspruch 9, **dadurch gekennzeichnet, dass** die Opferschicht auf der Basis von Titan oder von Nickel-Chrom ist.

11. Substrat nach einem der Ansprüche 9 und 10, **dadurch gekennzeichnet, dass** die Stärke der Opferschicht in der Größenordnung von einigen Nanometern liegt, zwischen 1 nm und 3 nm.

12. Substrat nach einem der vorangehenden Ansprüche, **dadurch gekennzeichnet, dass** mindestens eine der dielektrischen Schichten von einer Abfolge von Schichten mit starkem und schwachem Index wie $Si_3N_4/SiO_2$ oder $Si_3N_4/SiO_2/Si_3N_4$ zusammengesetzt ist.

13. Substrat nach einem der vorangehenden Ansprüche, **dadurch gekennzeichnet, dass** die Summe der Stärke der funktionellen Schichten maximal 50 nm beträgt.

14. Substrat nach einem der vorangehenden Ansprüche, **dadurch gekennzeichnet, dass** die Stärken der funktionellen Schichten etwa gleich sind.

15. Substrat nach einem der vorangehenden Ansprüche, **dadurch gekennzeichnet, dass** es härtbar, biegbar und/oder emaillierbar ist.

16. Substrat nach einem der vorangehenden Ansprüche, **dadurch gekennzeichnet, dass** es aus klarem oder massegefärbtem Glas oder aus elastischem oder starrem, transparentem Polymermaterial ist.

17. Substrat nach einem der vorangehenden Ansprüche, **dadurch gekennzeichnet, dass** es mindestens teilweise durch eine Beschichtung in Form eines Lacks oder eines Emails opak gemacht wurde.

18. Monolithische Verglasung oder Doppelverglasung, welche das Substrat nach einem der vorangehenden Ansprüche einschließt, wobei sich der Stapel aus dünnen Schichten vorzugsweise auf Seite 2 befindet, wobei die Seiten der Substrate von außen nach innen des Innenraums oder Raums nummeriert sind, den es ausstattet, wodurch diesem dabei eine Schutzwirkung gegenüber der Sonnenstrahlung verliehen wird.

19. Fassadenverkleidungsplatte vom Typ Brüstung, welche das opak gemachte Substrat nach Anspruch 17 einschließt.

**Claims**

1. A transparent substrate having a glazing function, provided with a thin-film multilayer coating that acts on solar radiation, **characterized in that** the coating comprises at least two absorbent functional layers each flanked by two transparent layers comprising a dielectric material, the functional layers being based on a metal belonging to the group consisting of: niobium, tantalum, molybdenum and zirconium.

2. The substrate as claimed in claim 1, **characterized in that** the functional layers are based on niobium.

3. The substrate as claimed in either of claims 1 and 2, **characterized in that** the metal of at least one of the functional layers is partially or entirely nitrided.

4. The substrate as claimed in claim 3, **characterized in that** the metal of all of the functional layers is nitrided.

5. The substrate as claimed in claim 3, **characterized in that** it comprises at least one alternation of a functional layer based on a nitrided metal and a functional layer based on a non-nitrided metal, or at least one alternation of a functional layer based on a non-nitrided metal and a functional layer based on a nitrided metal.

6. The substrate as claimed in one of the preceding claims, **characterized in that** said dielectric material is based on silicon nitride.

7. The substrate as claimed in claim 6, **characterized in that** said dielectric material is doped with aluminum.

8. The substrate as claimed in claim 7, **characterized in that** the aluminum is in a proportion of 5 to 10% by weight.

9. The substrate as claimed in one of the preceding claims, **characterized in that** a sacrificial layer is interposed between at least one of the functional layers and at least one of the dielectric layers that flank it.

10. The substrate as claimed in claim 9, **characterized in that** the sacrificial layer is based on titanium or on nickel-chromium.

11. The substrate as claimed in either of claims 9 and 10, **characterized in that** the thickness of the sacrificial layer is of the order of a few nanometers, lying between 1 nm and 3 nm.

12. The substrate as claimed in one of the preceding claims, **characterized in that** at least one of the dielectric layers is made up of an alternation of high-index and low-index layers, such as $Si_3N_4/SiO_2$ or $Si_3N_4/SiO_2/Si_3N_4$.

13. The substrate as claimed in one of the preceding claims, **characterized in that** the sum of the thicknesses of the functional layers is at most 50 nm.

14. The substrate as claimed in one of the preceding claims, **characterized in that** the thicknesses of the functional layers are substantially the same.

15. The substrate as claimed in one of the preceding claims, **characterized in that** it is toughenable, bendable and/or enamelable.

16. The substrate as claimed in one of the preceding claims, **characterized in that** it is made of clear or bulk-tinted glass, or made of a flexible or rigid transparent polymer material.

17. The substrate as claimed in one of the preceding claims, **characterized in that** it is at least partially opacified by a coat in the form of a lacquer or an enamel.

18. Monolithic glazing or double glazing incorporating the substrate as claimed in one of the preceding claims, the thin-film multilayer coating preferably being on face 2, the faces of the substrates being numbered from the outside to the inside of the passenger compartment or the room which is equipped therewith, giving it a solar radiation protection effect.

19. Building wall cladding panel of the curtain walling type, incorporating the opacified substrate as claimed in claim 17.

## RÉFÉRENCES CITÉES DANS LA DESCRIPTION

**Documents brevets cités dans la description**

- EP 0511901 A
- EP 0678483 A
- WO 0121540 A1
- US 2005079369 A
- US 2004137234 A